# FASCICULE DE BREVET EUROPEEN

(11) **EP 0 863 389 B1**
(45) Date de publication et mention de la délivrance du brevet: **17.09.2003**
(21) Numéro de dépôt: 97103317.0
(22) Date de dépôt: 28.02.1997
(51) Int. Cl.: G01J 5/12

(54) **Capteur thermoélectrique**
Thermoelektrischer Fühler
Thermoelectric sensor

(43) Date de publication de la demande: 09.09.1998
(73) Titulaire: EM Microelectronic-Marin SA, 2074 Marin (CH)
(72) Inventeur: Münch, Ulrich, 2000 Neuchâtel (CH); Jaeggi, Dominik, 1700 Fribourg (CH); Schneeberger, Niklaus, 8600 Dübendorf (CH)
(74) Mandataire: Balsters, Robert

(56) Documents cités:
- FR-A- 2 555 312
- SENSORS AND ACTUATORS A, vol. A48, no. 1, 1 Mai 1995, pages 47-54, XP000521309 BAER W G ET AL: "A 32-ELEMENT MICROMACHINED THERMAL IMAGER WITH ON-CHIP MULTIPLEXING"
- 1995 IEEE TENCON. IEEE REGION TEN INTERNATIONAL CONFERENCE ON MICROELECTRONICS AND VLSI, HONG KONG, NOV. 6 - 10, 1995, 6 Novembre 1995, INSTITUTE OF ELECTRICAL AND ELECTRONICS ENGINEERS, pages 198-201, XP000585776 SCHNEEBERGER N ET AL: "OPTIMIZED CMOS INFRARED DETECTOR MICROSYSTEMS"

## Description

La présente invention concerne un capteur thermoélectrique formé par une membrane comprenant une pluralité d'éléments thermoélectriques définissant respectivement une pluralité de cellules élémentaires. En général, chaque élément thermoélectrique est composé d'une pluralité de thermocouples et définit une surface élémentaire distincte des autres.

Pour que le capteur puisse mesurer une quantité d'énergie thermique reçue avec précision, il est nécessaire d'isoler thermiquement au mieux chaque cellule élémentaire des autres. En effet, il faut éviter que de l'énergie thermique captée par une cellule élémentaire diffuse ensuite vers d'autres cellules élémentaires et soit captée à nouveau.

Les capteurs thermoélectriques formés par une membrane comprenant une pluralité d'éléments thermoélectriques sont sujet au problème susmentionné étant donné que la membrane elle-même ne permet pas une diffusion de l'énergie thermique reçue dans un substrat thermiquement conducteur de manière à éviter une diffusion de l'énergie thermique reçue au niveau de la membrane elle-même.

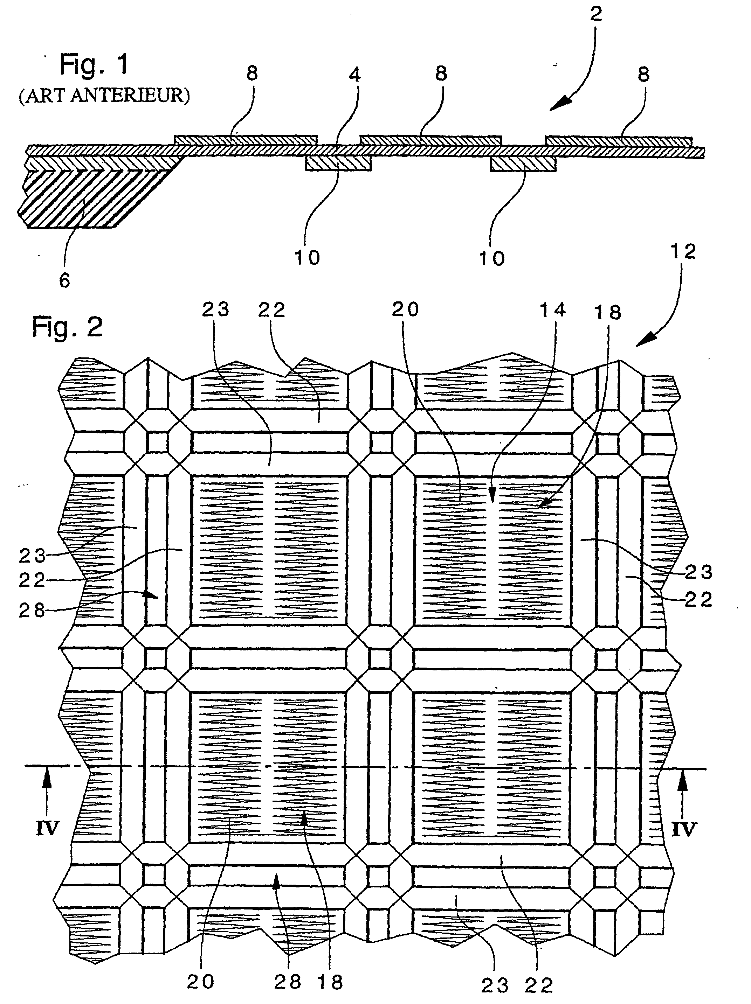

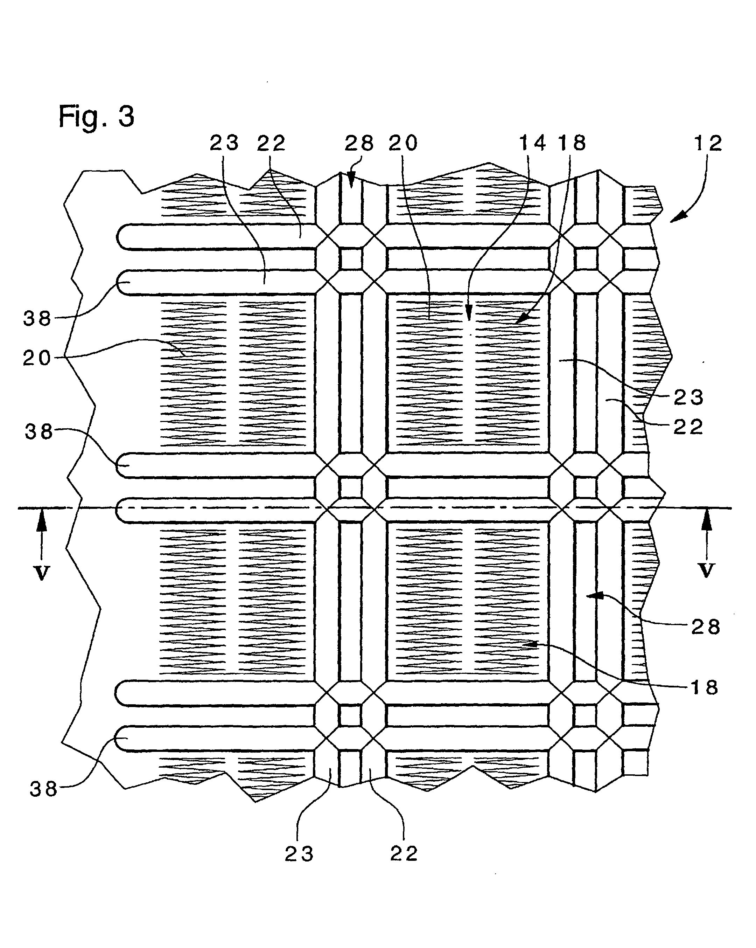

Sur la figure 1 est représenté, de manière schématique et simplifiée, un capteur thermoélectrique de l'art antérieur décrit dans le document de A. D. Oliver et al., intitulé "A bulk micromachined 1024-element uncooled infrared imager", plus particulièrement le mode de réalisation décrit à la figure 3 de ce document.

Sur cette figure 1 du dessin ci-annexé, le capteur thermoélectrique 2 de l'art antérieur comprend une membrane 4 supportée par un substrat 6. Sur la membrane 4 sont agencés plusieurs éléments thermoélectriques 8. Du côté arrière de la membrane 4, c'est-à-dire du côté du support 6, est prévue une pluralité de barres en silicium 10. Dans le plan de la membrane 4, ces barres 10 délimitent la pluralité de cellules élémentaires et définissent ainsi des conducteurs thermiques permettant d'évacuer l'énergie thermique reçue par les éléments thermoélectriques 8. Le silicium est un conducteur thermique et il présente l'avantage de pouvoir également être utilisé pour l'agencement des moyens électroniques, notamment pour l'adressage des divers éléments thermoélectriques.

Toutefois, le capteur thermoélectrique 2 présente divers inconvénients. Premièrement, sa fabrication nécessite des étapes de micro-usinage du côté avant et du côté arrière de la membrane 4, ce qui engendre normalement des difficultés supplémentaires pour la production de telles structures. Deuxièmement, bien que le silicium soit un conducteur thermique correct, son coefficient de conduction thermique est relativement moyen. Finalement, les barres en silicium 10 forment des ponts thermiques entre les éléments thermoélectriques adjacents. Ainsi, les barres en silicium 10 permettent certes une certaine évacuation de l'énergie thermique reçue par le capteur 2, mais isolent relativement mal les cellules élémentaires les unes des autres, ce qui nuit à l'efficacité et à la précision de ce capteur 2.

FR-A-2 555 312 divulgue un capteur statique d'horizon infrarouge comprenant des fils métalliques.

Le but de la présente invention est de fournir un capteur thermoélectrique également formé par une membrane comprenant une pluralité d'éléments thermoélectriques distincts et permettant une mesure thermoélectrique précise, c'est-à-dire assurant une très bonne isolation thermique des diverses cellules élémentaires de ce capteur.

La présente invention a aussi comme but d'éliminer au maximum les étapes de micro-usinage du côté arrière de la membrane. Finalement, l'invention a également comme but de fournir des capteurs thermoélectriques réalisables de manière industrielle par des moyens maîtrisés par l'homme du métier permettant ainsi d'obtenir des capteurs relativement peu onéreux pour des performances élevées.

A cet effet, la présente invention a pour objet un capteur thermoélectrique selon la revendication 1.

Les revendications dépendantes définissent des modes de réalisation additionels.

Grâce aux caractéristiques de l'objet de l'invention, l'élimination de l'énergie thermique incidente par les fils métalliques de conduction est bien supérieure à l'élimination de cette énergie thermique par une structure analogue en silicium comme dans l'art antérieur, étant donné que l'or notamment présente une conduction thermique bien supérieure à celle du silicium. De plus, le capteur thermoélectrique selon l'invention ne nécessite aucune étape de micro-usinage particulière du côté arrière de la membrane pour permettre la conduction de l'énergie thermique reçue vers le substrat supportant la membrane.

Dans un mode de réalisation préféré, il est prévu que chaque cellule élémentaire est isolée thermiquement de chaque cellule élémentaire adjacente par deux fils métalliques parallèles et séparées par une région intermédiaire à faible conduction thermique.

Grâce à cette dernière caractéristique, l'isolation thermique entre les cellules élémentaires adjacentes est très efficace, aucun pont de conduction thermique étant agencé entre les cellules élémentaires adjacentes comme c'est le cas dans l'art antérieur cité précédemment.

Selon une caractéristique particulière, il est prévu d'agencer les fils ou lignes métalliques sur une couche de passivation supérieure de la membrane par croissance galvanique, selon une technique connue de l'homme du métier dans l'agencement des bosses ou plots de connexion prévus notamment sur des circuits intégrés pour permettre des connexions électriques externes.

La présente invention sera décrite de manière plus détaillée ci-après à l'aide de la description suivante, faite en référence au dessin annexé, donné à titre d'exemple nullement limitatif, dans lequel :
- la figure 1, déjà décrite, montre schématiquement une coupe d'un capteur thermoélectrique de l'art antérieur;
- les figures 2 et 3 sont des vues de dessus partielles d'une capteur thermoélectrique selon l'invention, et
- les figures 4 et 5 sont des coupes partielles respectivement selon les lignes de coupe IV-IV et V-V des figures 2 et 3.

Le capteur thermoélectrique 12 est formé par une membrane 14 supportée par un substrat 16 et comprenant une pluralité de cellules élémentaires 18. Chaque cellule élémentaire 18 est formée par un élément thermoélectrique 20 composé d'une pluralité de thermocouples. Chaque cellule élémentaire 18 définit une surface élémentaire distincte de la membrane 14, cette surface élémentaire étant délimitée par des fils en or 22 et 23. Ces fils en or 22 et 23 sont agencés sur la face avant 25 de la membrane 14. Ils servent à isoler thermiquement les cellules élémentaires adjacentes afin d'assurer une mesure précise.

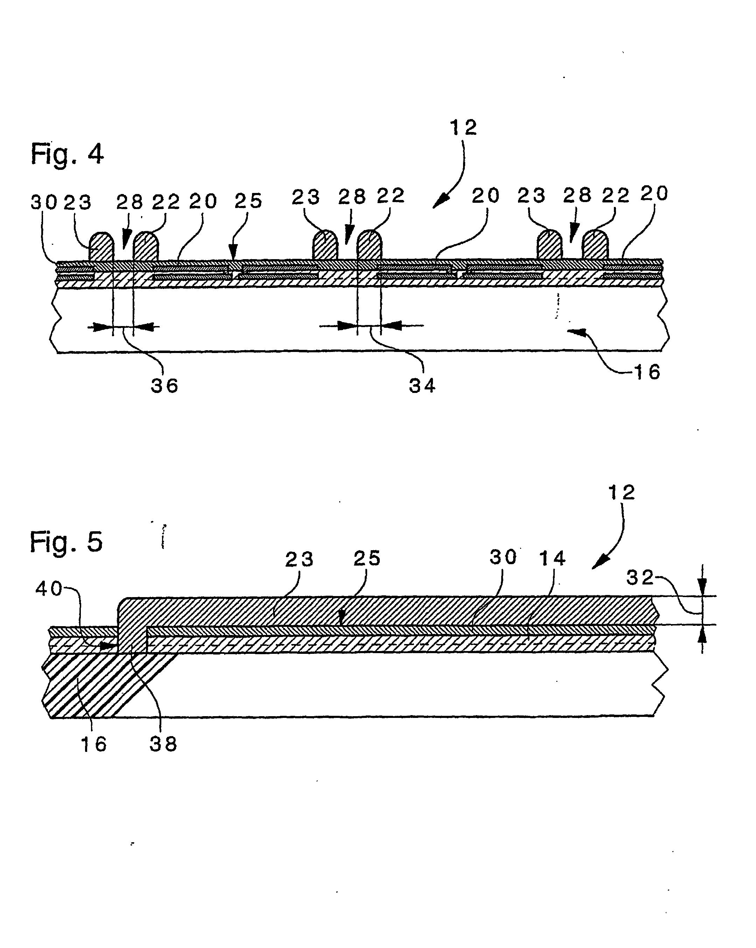

On notera que dans un mode de réalisation non décrit en détail ici, il est possible de prévoir un seul fil en or 22 pour isoler thermiquement les cellules élémentaires adjacentes. Toutefois, le mode de réalisation représenté à l'aide des figures 2 à 5 est préféré étant donné que l'agencement prévu dans ce mode de réalisation permet non seulement d'éliminer avec une grande efficacité l'énergie thermique reçue par le capteur 12, mais également d'isoler thermiquement les cellules élémentaires entre elles. En effet, l'agencement de deux fils en or parallèles et séparés par une région intermédiaire 28 à faible conduction thermique assure une bonne isolation thermique entre deux cellules élémentaires adjacentes. Dans le mode de réalisation représenté ici, la région intermédiaire 28 forme un canal. Dans d'autres modes de réalisation, cette région intermédiaire peut être remplie par un matériau isolant thermiquement. Ainsi, les lignes en or 22 sont isolées thermiquement des lignes en or 23 de sorte que les lignes en or 22 et 23 ne forment pas de pont thermique entre des cellules élémentaires adjacentes.

Dans ce mode de réalisation préféré, les lignes en or 22 et 23 sont caractérisées par un coefficient de conduction thermique élevé. La pluralité de cellules élémentaires est agencé sous forme matricielle, les lignes en or 22 et 23 séparant les surfaces élémentaires de ces cellules élémentaires formant un réseau de premières lignes orientées selon une première direction et de deuxièmes lignes orientées selon une deuxième direction perpendiculaire, ces premières et deuxièmes lignes se croisant ainsi à angle droit.

On notera que l'homme du métier connaît comment agencer des éléments thermoélectriques formés d'une pluralité de thermocouples dans une membrane formée notamment de silicium, polysilicium et/ou oxyde de silicium.

La membrane 14 possède une couche de passivation supérieure 30 qui recouvre les éléments thermoélectriques 20. Les fils en or 22 et 23 sont situés sur la couche de passivation 30.

Les fils en or peuvent être obtenus par croissance galvanique selon une technique connue de l'homme du métier. Cette technique permet d'obtenir des fils en or d'une hauteur appréciable. De préférence, la hauteur des fils ou lignes en or séparant les cellules élémentaires est supérieure ou égale à 10 µm. Cependant, toute autre technique pour former les fils en or connue de l'homme du métier peut être utilisée pour réaliser le capteur selon l'invention.

Selon diverses variantes d'exécution, la largeur 34 des fils en or 22 et 23 est comprise entre 10 µm et 50 µm. La largeur 36 de la région intermédiaire 28 entre les fils 22 et 23 est comprise entre 10 µm et 50 µm. Une telle plage permet d'assurer correctement l'isolation thermique entre les fils 22 et les fils 23 pour les diverses variantes d'exécution.

Chaque fil ou ligne en or 22 et 23 se termine par deux bornes 38 traversant la structure de la membrane 14 qui se prolonge sur le substrat 16. Ainsi, il est prévu une ouverture 40 dans la structure susmentionnée de manière que la borne 38, également en or, relie thermiquement le fil 22 ou 23 au substrat 16 pour permettre l'élimination de l'énergie thermique reçue par le capteur.

On notera que dans une variante de réalisation, il est prévu que l'ensemble des bornes 38 soit relié directement par un fil ou une ligne en or définissant ainsi un cadre entourant la pluralité de cellules élémentaires. Dans une telle variante de réalisation, plusieurs ouvertures 40 le long du cadre peuvent être prévues. Il est aussi possible de prévoir une tranchée entourant les cellules élémentaires 18 dans la structure formant la membrane 14 qui se prolonge sur le substrat 16 pour assurer un couplage thermique maximal entre les fils en or et le substrat 16, lequel est normalement formé par un matériau à base de silicium.

## Revendications

1. Capteur thermoélectrique (12) formé par une membrane (14) comprenant une pluralité de cellules élémentaires (18) formées respectivement par une pluralité d'éléments thermoélectriques (20), ladite pluralité de cellules élémentaires définissant respectivement une pluralité de surfaces élémentaires distinctes de ladite membrane, **caractérisé en ce que** chaque cellule élémentaire est isolée thermiquement des cellules élémentaires adjacentes par des fils métalliques agencés sur une face de ladite membrane et reliés thermiquement à un substrat (16) supportant ladite membrane.

2. Capteur selon la revendication 1, **caractérisé en ce que** chaque cellule élémentaire (18) est isolée thermiquement de chaque cellule élémentaire adjacente par deux fils métalliques (22 et 23) parallèles et séparés par une région intermédiaire (28) à faible conduction thermique.

3. Capteur selon la revendication 1 ou 2, **caractérisé en ce que** lesdits fils métalliques (22, 23) sont en or et agencés sur la face avant (25) de ladite membrane (14).

4. Capteur selon la revendication 3, **caractérisé en ce que** ladite membrane (14) a une couche de passivation supérieure (30) recouvrant lesdits éléments thermoélectriques (20), lesdits fils en or (22, 23) étant situés sur ladite couche de passivation.

5. Capteur selon l'une des revendications précédentes, **caractérisé en ce que** lesdits fils métalliques (22, 23) séparant lesdites cellules élémentaires (18) sont obtenus par croissance galvanique.

6. Capteur selon l'une des revendications précédentes, **caractérisé en ce que** la hauteur desdits fils (22, 23) est supérieure ou égale à 10 µm.

7. Capteur selon l'une des revendications précédentes, **caractérisé en ce que** ladite pluralité d'éléments thermoélectriques (20) est agencée sous forme matricielle, lesdits fils métalliques (22, 23) séparant lesdites cellules élémentaires (18) formant un réseau de premiers fils et de deuxièmes fils se croisant à angle droit.

8. Capteur selon l'une des revendications précédentes, **caractérisé en ce que** chaque fil métallique (22, 23) se termine par deux bornes (38) traversant la structure de ladite membrane (14) se prolongeant sur ledit substrat (16).

## Patentansprüche

1. Thermoelektrischer Sensor (12), der aus einer Membran (14) gebildet ist, die mehrere Elementarzellen (18) umfaßt, die jeweils aus mehreren thermoelektrischen Elementen (20) gebildet sind, wobei die mehreren Elementarzellen jeweils mehrere verschiedene Elementaroberflächen der Membran definieren, **dadurch gekennzeichnet, daß** jede Elementarzelle von benachbarten Elementarzellen durch Metalldrähte, die auf einer Fläche der Membran angeordnet und mit einem die Membran tragenden Substrat (16) thermisch verbunden sind, thermisch isoliert ist.

2. Sensor nach Anspruch 1, **dadurch gekennzeichnet, daß** jede Elementarzelle (18) von jeder benachbarten Elementarzelle durch zwei Metalldrähte (22 und 23), die zueinander parallel und durch einen Zwischenbereich (28) mit geringer Wärmeleitung getrennt sind, thermisch isoliert ist.

3. Sensor nach Anspruch 1 oder 2, **dadurch gekennzeichnet, daß** die Metalldrähte (22, 23) aus Gold sind und auf der vorderen Fläche (25) der Membran (14) angeordnet sind.

4. Sensor nach Anspruch 3, **dadurch gekennzeichnet, daß** die Membran (14) eine obere Passivierungsschicht (30) besitzt, die die thermoelektrischen Elemente (20) bedeckt, wobei sich die Golddrähte (22, 23) auf der Passivierungsschicht befinden.

5. Sensor nach einem der vorhergehenden Ansprüche, **dadurch gekennzeichnet, daß** die Metalldrähte (22, 23), die die Elementarzellen (18) trennen, durch galvanisches Wachstum erhalten werden.

6. Sensor nach einem der vorhergehenden Ansprüche, **dadurch gekennzeichnet, daß** die Höhe der Drähte (22, 23) größer oder gleich 10 um ist.

7. Sensor nach einem der vorhergehenden Ansprüche, **dadurch gekennzeichnet, daß** die mehreren thermoelektrischen Elemente (20) in Matrixform angeordnet sind, wobei die die Elementarzellen (18) trennenden Metalldrähte (22, 23) ein Gitter aus ersten Drähten und aus zweiten Drähten, die sich unter einem rechten Winkel kreuzen, bilden.

8. Sensor nach einem der vorhergehenden Ansprüche, **dadurch gekennzeichnet, daß** jeder Metalldraht (22, 23) in zwei Anschlüssen (38) endet, die durch die Struktur der Membran (18) verlaufen und sich zum Substrat (16) erstrecken.

## Claims

1. Thermoelectric sensor (12) formed by a membrane (14) including a plurality of elementary cells (18) formed respectively by a plurality of thermoelectric elements (20), said plurality of elementary cells defining respectively a plurality of elementary surfaces distinct from said membrane, **characterised in that** each elementary cell is thermally insulated from adjacent elementary cells by metal wires arranged on one face of said membrane and thermally connected to a substrate (16) supporting said membrane.

2. Sensor according to claim 1, **characterised in that** each elementary cell (18) is thermally insulated from each adjacent elementary cell by two parallel metal wires (23 and 23) separated by an intermediate low thermal conduction region (28).

3. Sensor according to claim 1 or 2, **characterised in that** said metal wires (22, 23) are made of gold and arranged on the front face (25) of said membrane (14).

4. Sensor according to claim 3, **characterised in that** said membrane (14) comprises an upper passivation layer (30) covering said thermoelectric elements (20), said gold wires (22, 23) being disposed atop said passivation layer.

5. Sensor according to any of the preceding claims, **characterised in that** said metal wires (22, 23) separating said elementary cells (18) are made by galvanic growth.

6. Sensor according to any of the preceding claims, **characterised in that** the height of said wires (22, 23) is greater than or equal to 10µm.

7. Sensor according to any of the preceding claims, **characterised in that** said plurality of thermoelectric (20) is arranged in a matrix array, said metal wires (22, 23) separating said elementary cells (18) forming a pattern of first and second wires crossing each other at right angles.

8. Sensor according to any of the preceding claims, **characterised in that** each metal wire (22, 23) ends in two terminals (38) passing through the structure of said membrane (14) which extends across said substrate (16).
